# EUROPEAN PATENT APPLICATION

(11) **EP 1 587 056 A1**
(43) Date of publication of application: **19.10.2005**
(21) Application number: 05008390.6
(22) Date of filing: 18.04.2005
(51) Int. Cl.: G09G 3/32

(54) **Current driven emissive display device**

(30) Priority: 16.04.2004 JP 2004121206
(71) Applicant: SANYO ELECTRIC CO., LTD., Moriguchi-shi, Osaka 570-8677 (JP)
(72) Inventor: Akima, Isao, Ogaki-shi,Gifu-ken (JP)
(74) Representative: Glawe, Delfs, Moll

(57) **Abstract**

The variation of the electric current fed to the luminescent element is prevented in the display device with the electric current driven luminescent element, achieving uniform display brightness. The pulse width modulation circuit (10) generating a pulse width modulation signal SRP, the pulse of which is modulated for a certain period according to the image data, and the electric current generation circuit (20) generating the pulse current I corresponding the pulse width modulation signal are formed. The pulse current I is supplied to the electric current driven luminescent elements (L1, L2) through the pixel selection TFT (51, 52). Since the pulse current I is stable and at a certain level, it is not influenced by the variation among the pixels due to the manufacturing process, achieving uniform display brightness and improved display quality.

## Description

### BACKGROUND OF THE INVENTION

### Field of Invention

This invention relates to a display device with an electric current driven luminescent element.

### Description of Related Art

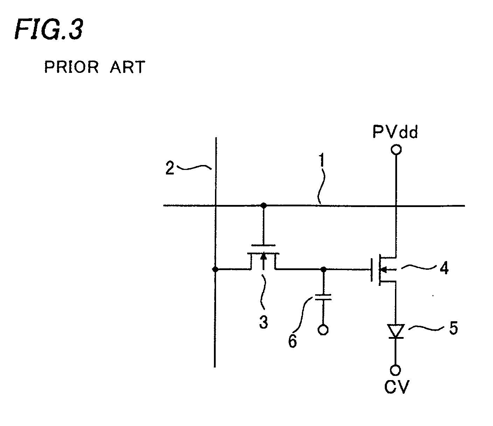

Fig. 3 is a circuit diagram of one pixel of a conventional active matrix display device. One pixel is provided for each crossing point of a gate line 1 and a drain line 2. The reference numeral 3 denotes an N-channel type pixel selection TFT (thin film transistor), the reference numeral 4 an N-channel type driving TFT, the reference numeral 5 an electric current driven luminescent element (for example, a LED element, an organic El element, or an inorganic EL element) and the reference numeral 6 a storage capacitor.

The pixel selection TFT 3 turns on when the selection signal (vertical scanning signal) fed to the gate line 1 becomes high and supplies an analog image signal fed to the drain line 2 to the gate of the driving TFT 4. The analog image data is held by the capacitor 6 for one horizontal period. The driving TFT 4 supplies an electric current according to the analog image data from an electric source PVdd to the electric current driven luminescent element 5. The electric current luminescent element 5 emits light according to the electric current fed from the driving TFT 4, making a display based on the analog image data.

However, it is somewhat difficult to obtain a uniform brightness over an entire screen having a multitude of pixels.

It is an object of this invention to provide a display device that lessens this drawback.

### SUMMARY OF THE INVENTION

The solution according to the invention lies in the features of the independent claims and preferably in those of the dependent claims.

The invention provides a display device that includes a pulse width modulation circuit generating a pulse width modulation signal. The pulse of the signal is modulated according to image data. The device also includes an electric current generation circuit generating a pulse current corresponding to the pulse width modulation signal, and a pixel including an electric current driven luminescent element emitting light according to the pulse signal.

The invention also provides a display device that includes a plurality of pixels, each of which includes a pixel selection transistor and an electric current driven luminescent element connected to the pixel selection transistor, and a pulse width modulation circuit generating a pulse width modulation signal. The pulse of the signal is modulated according to image data. The device also includes an electric current generation circuit generating a pulse current corresponding to the pulse width modulation signal so that each of the pixels receives the pulse current in turn such that the electric current driven luminescent element receives a corresponding pulse current through a corresponding pixel selection transistor.

Providing the pulse width modulation circuit in conjunction with the electric current generation circuit according to the invention allows for a more positive control of the current supplied to the luminescent element, and therefore gives a better control of the brightness of the display that suffers less under deviations due to invariable tolerances of the components. In particular, the invention allows to use the same electric current source for supplying the electric current to the several pixels, like the pixels of a row or a column. In a preferred embodiment, the same electric current source supplies the electric current to the entire pixels of the display device. The pulse current generated by the electric current generation circuit is stable at a certain level. It is therefore not influenced by variations among the pixels due to the manufacturing process, thereby achieving a uniform display brightness and improved display quality. According to the invention, a stable and even brightness without uneven display is achieved. Therefore, a high quality display with uniform brightness and entire screen can be realized.

### BRIEF DESCRIPTION OF THE DRAWINGS

Fig. 1 is a circuit diagram of the display device of an embodiment of this invention.
Fig. 2 shows a configuration of the entire display device of the embodiment of this invention.
Fig. 3 is a circuit diagram showing one pixel of the active matrix display device.

### DETAILED DESCRIPTION OF THE INVENTION

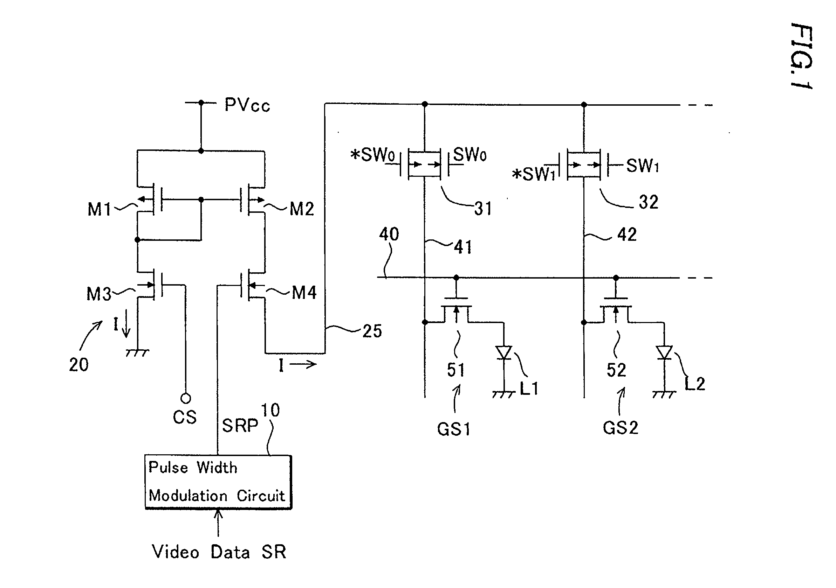

Next, a display device of an embodiment of this invention will be explained by referring to figures. Fig. 1 is a circuit diagram of the display device of this invention. The image data includes image data corresponding R (red), G (green), and B (blue). However, only the part of the display device corresponding to R will be explained for the sake of simplicity. The parts of the display device corresponding to G and B have the same configuration.

The reference numeral 10 is a pulse width modulation circuit that modulates the image data SR with a certain bit number based on the gradation number into a pulse width modulation signal SRP with a modulated pulse width according to the size of the image data SR for a certain period.

The reference numeral 20 is an electric current generation circuit that generates a pulse current I corresponding to the pulse width modulation signal SRP. M1 is a P-channel type MOS transistor, to the source of which the voltage PVcc is applied, and the gate and the drain of which are connected each other, in the electric current generation circuit 20. M2 is a P-channel type MOS transistor, to the source of which a source voltage PVcc is applied, and the gate of which is commonly connected to the gate of the P-channel type MOS transistor M1. These P-channel type MOS transistors M1 and M2 configure a component of a current mirror current supply circuit.

M3 is an N-channel type MOS transistor, the drain of which is connected to the drain of the P-channel type MOS transistor M1, and the source of which is grounded. The gate of the N-channel type MOS transistor M3 receives a circuit selection signal CS. M3 is also an electric current source transistor, supplying the electric current to the P-channel type MOS transistor M1. M4 is an N-channel type MOS transistor, the source of which is connected to the drain of the P-channel type MOS transistor M2, the gate of which receives the pulse width modulation signal SRP, and the drain of which outputs the pulse current I according to the pulse width modulation signal SRP to the electric current supplying line 25.

That is, the pulse current I, the magnitude of which is either equal to or in proportion to the electric current going through the N-channel type MOS transistor M3, goes through the N-channel type MOS transistor M4 through a current-mirror-current-supply circuit configuration shown in Fig. 1 while the pulse width modulation signal SRP has a high level pulse in response to the high circuit selection signal CS.

A transfer gate 31 that performs switching according to a switching signals SW0, *SW0 (*SW0 is an inverted signal of the SW0) and that supplies the pulse current I to a drain line 41 is connected to the electric current supplying line 25. The switching signals SW0 and *SW0 are horizontal scanning signals and supplied from a horizontal driving circuit not shown in the figure.

A pixel GS1 forming a pixel region of the display panel is disposed near the point where the drain line 41 and the gate line 40 are crossed. The pixel GS1 has a pixel selection TFT 51 and an electric current driven luminescent element L1 (for example, a LED element or an organic EL element). Note that the driving TFT shown in Fig. 3 is not required in this embodiment. The gate line 40 is connected to the gate of the pixel selection TFT 51. A vertical scanning signal is supplied to the gate line 40 from a vertical scanning circuit not shown in the figure. The pixel selection TFT 51 performs switching according to the vertical scanning signal, supplying the pulse current I coming from the drain line 41 to the electric current driven luminescent element L1.

Likewise, a transfer gate 32 that performs switching according to a switching signals SW1, *SW1 (*SW1 is an inverted signal of the SW1) and that supplies the pulse current I to a drain line 42 is connected to the electric current supplying line 25. The switching signals SW1 and *SW1 are also the horizontal scanning signal.

The pixel GS2 forming the pixel region of the display panel is disposed near the point where the drain line 42 and the gate line 40 intersect. The pixel GS2, like the pixel GS1, has the pixel selection TFT 52 and the electric current driven luminescent element L2 (for example, a LED element or an organic EL element). Only a pair of GS1 and GS2 is shown in Fig. 1. However, the pixels with the same configuration are disposed in row direction as well as in column direction in an actual display panel.

Next, the operation of the display device will be explained. The electric current generation circuit 20 becomes active when the circuit selection signal CS is at high level. The pulse current I, the magnitude of which is either equal to or in proportion to the electric current going through the N-channel type MOS transistor M3, is outputted to the electric current supplying line 25 through the current-mirror-current-supply circuit configuration while the supple width modulation signal SRP has a high level pulse.

The pulse current I is fed to the drain line 41 through the transfer gate 31 when the switching signal SW0 becomes high. Then, the pulse current I is further fed to the electric current driven luminescent element L1 through the pixel selection TFT 51, making the electric current driven luminescent element L1 emit the light with the magnitude in proportion to the length of the pulse current I.

The electric current supplied to the electric current driven luminescent element L1 and L2 of the pixels GS1 and GS2 is not generated by the driving TFT formed for each of the pixels in this embodiment. Rather, it is generated as the pulse current I according to the pulse width modulation signal SRP by the electric current generation circuit 20 formed outside of the pixel. Therefore, the same electric current source supplies the electric current to the entire pixels, achieving a stable and even brightness without uneven display. The uneven brightness in the entire screen or the uneven emission of light among the luminescent elements will not take place in the display device of this embodiment, acquiring a high quality display with uniform brightness in the entire screen.

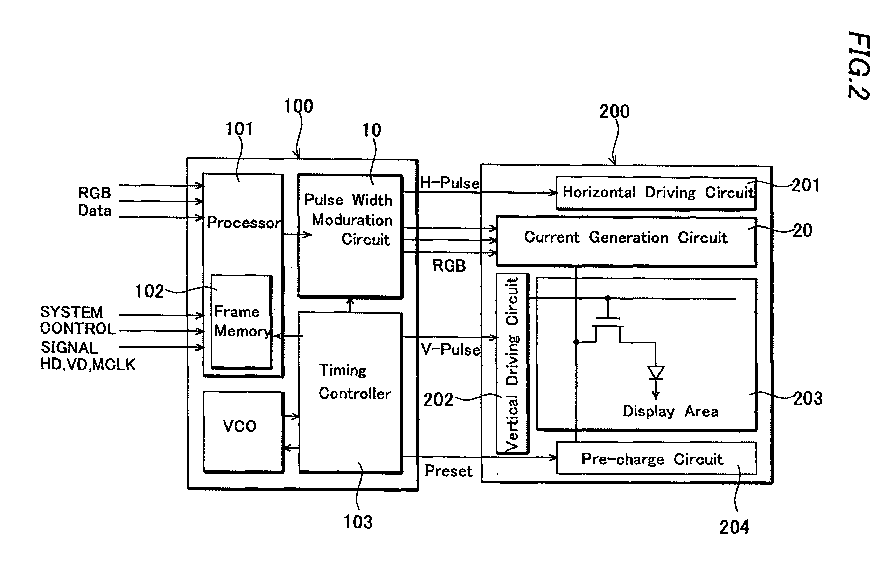

Next, the entire configuration of the display device of this invention will be explained by referring to Fig. 2. The reference numeral 100 denotes an image signal processing LSI that has a processor 101 for performing a certain signal processing to the RGB image data supplied from outside, a frame memory for storing the processed image data, a timing controller 103 for generating various timing signals of the image signal processing LSI and various timing signals of the display panel 200, and a pulse width modulation circuit 10.

The RGB image data supplied from outside is modulated into the image data with a certain bit number according to the gradation number and stored in the frame memory 102 for each frame. The image data stored in the frame memory 102 is outputted to the pulse width modulation circuit 10 with a certain timing, generating the RGB pulse width modulation signal.

The RGB pulse width modulation signal generated by the pulse width modulation circuit 10 is transmitted to the display panel 200. The pulse width modulation signal is modulated into the pulse current I by the electric current generation circuit 20 formed inside the display panel 200 and fed to each of the pixels. The display panel 200 also has a horizontal driving circuit 201, a vertical driving circuit 202, a display region 203, and a pre-charge circuit 204 of the drain line.

In this embodiment, the electric current fed to each of the electric current driven luminescent elements is not generated by a driving TFT formed for each of the pixels, in stead, the electric current is generated as the pulse current corresponding to the pulse width modulation signal generated by the electric current generation circuit formed outside of the pixel. Therefore, the constant electric current is supplied to the pixel, making an even display. The uneven brightness in the entire screen or the uneven emission of light among the luminescent elements will not take place in the display device of this embodiment, acquiring a high quality display with uniform brightness in the entire screen.

The stored electric charge voltage is modulated to an electric current in the driving method of the luminescent element in prior arts. Therefore, it is necessary to form a plurality of TFTs and connecting wirings inside each of the pixels, narrowing the open aperture. However, the number of TFTs necessary for each pixel is only one in this embodiment, significantly improving the open aperture.

Additionally, the driving method of this embodiment is to drive the device by supplying a certain level of electric current from outside. Therefore, the TFT formed for each pixel is expected to perform only the pixel selection function, leading to the smaller size of the TFT, which has just an enough size to transmit the minimum electric current. The influence of the variation among TFTs due to the manufacturing process can also be minimized.

Since the luminescent electric current is even in the entire screen in this embodiment, the life expectancy of the luminescent elements can be equal, leading to the even and high quality display for a longer period.

## Claims

1. A display device comprising:
- a pulse width modulation circuit (10) generating a pulse width modulation signal, the pulse of the signal being modulated according to image data;
- an electric current generation circuit (20) generating a pulse current corresponding to the pulse width modulation signal; and
- a pixel (GS1) comprising an electric current driven luminescent element (L1) emitting light according to the pulse signal.

2. The display device of claim 1, wherein the electric current driven luminescent element (L1) comprises an LED element, an organic EL element or an inorganic EL element.

3. The display device of claim 1 or 2, wherein the electric current generation circuit (20) is configured as a current-mirror-current-supply circuit.

4. A display device comprising:
- a plurality of pixels (GS1, GS2), each of the pixels (GS1, GS2) comprising a pixel selection transistor (51, 52) and an electric current driven luminescent element (L1, L2) connected to the pixel selection transistor;
- a pulse width modulation circuit (10) generating a pulse width modulation signal, the pulse of the signal being modulated according to image data; and
- an electric current generation circuit (20) generating a pulse current corresponding to the pulse width modulation signal so that each of the pixels (GS1, GS2) receives the pulse current in turn such that the electric current driven luminescent element (L1, L2) receives a corresponding pulse current through its corresponding pixel selection transistor (51, 52).

5. The display device of claim 4, wherein the electric current driven luminescent element (L1, L2) comprises an LED element, an organic EL element or an inorganic EL element.

6. The display device of claim 4 or 5, wherein the electric current generation circuit (20) is configured as a current-mirror-current-supply circuit.

7. The display device according to any of claims 4 to 6, wherein the electric current generation circuit (20) supply several pixels (GS1, GS2), preferably the entirety of the pixels of the display device.
